# NEW EUROPEAN PATENT SPECIFICATION

(11) **EP 0 188 824 B2**
(45) Date of publication and mention of the opposition decision: **13.01.1993**
(45) Mention of the grant of the patent: 22.02.1989
(21) Application number: 85201347.3
(22) Date of filing: 22.08.1985
(51) Int. Cl.: B62D 33/06

(54) **Pivot connection for fastening a tilting cylinder to the chassis and the tiltable cab of a vehicle**
Zapfenverbindung zum Befestigen eines Kippzylinders am Fahrgestell und am kippbaren Fahrerhaus eines Fahrzeuges
Joint à pivot pour attacher un cylindre basculant au châssis et à la cabine basculante d'un véhicule

(30) Priority: 23.01.1985 NL 8500180
(43) Date of publication of application: 30.07.1986
(73) Proprietor: Applied Power Inc., Brookfield Wisconsin 53005 (US)
(72) Inventor: Kerk, Gerardus Jacobus Anthonius, NL-7611 AX Aadorp (NL); Loevgren, Sonny, S-15187 Soedertalje (SE)
(74) Representative: Boelsma, Gerben Harm, Ir.

(56) References cited:
- DE-A- 2 229 436
- DE-A- 3 309 556
- DE-C- 2 337 900
- PATENT ABSTRACTS OF JAPAN, vol. 7, no. 63 (M-200)[1208], 16th March 1983
- PATENT ABSTRACTS OF JAPAN, vol. 7, no. 203 (M-241)[1348], 8th September 1983
- PATENT ABSTRACTS OF JAPAN, vol. 7, no. 165 (M-230)[1310], 20th July 1983

## Description

The invention relates to a pivot connection according to the first point of claim 1.

Similar connections are known. They have the disadvantage that due to the contact of metal with metal between the connecting eye and the pivot pin a ranling noise occurs during driving. The application of rubber, e.g. in the shape of a silentblock, is not possible due to the large load occurring during tilting of the cab, such silentblocks being not able to stand up against such loads.

The invention aims at removing the said disadvantage. This is achieved according to the features of claim 1.

During riding, the occurring forces, which are rather small, are received by the rubber ring or rings: During the tilting of the cab the rings are compressed and the resulting large load is received by the direct support of the eye by the pivot pin.

For a uniform loading the eye has two chambers which are provided symmetrically as seen in the cross-section through the axis.

In order to permit assembling the tilting cylinder under a small angle relative to the longitudinal axis of the vehicle, in connection with variations in the cab structure mounting, it is preferable to have the eye aperture flaring outwardly at both ends by giving it a beveled or convex shape in the direction of the axis.

In order to make the connections maintenance free, a.o. to make lubrication with grease superfluous, it is preferable to manufacture the pivot pin of a non-corroding material or to line it with such a material.

The invention will further be explained below with reference to the drawing which shows an embodiment, given as an example, of the pivot connection according to the invention.
Fig. 1 shows a schematic side elevation of the front part of a vehicle having a tiltable cab.
Fig. 2 shows a section through the axis of a pivot connection, applied to the cab of fig. 1.
Fig. 3 shows a cross-section corresponding to fig. 2 of a modification.

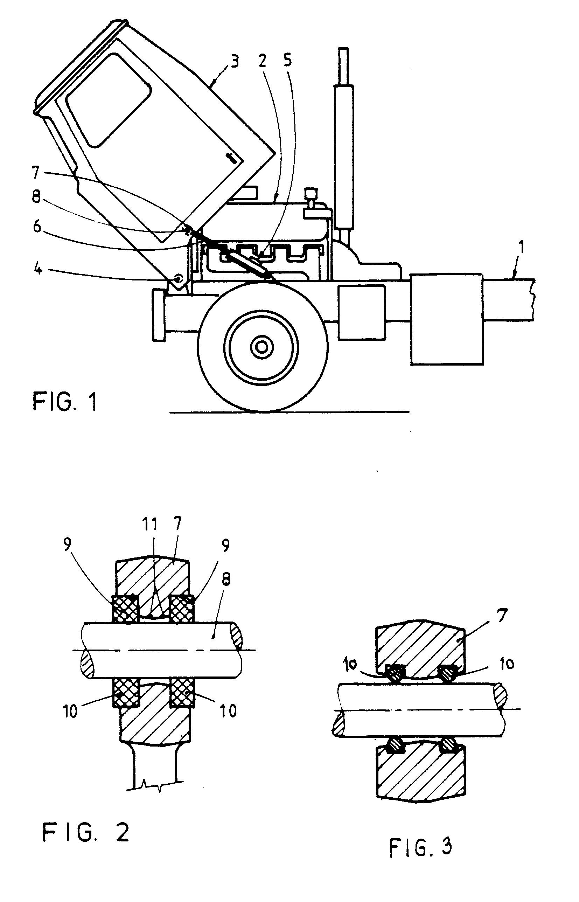

Fig. 1 shows the front part of a vehicle chassis 1 having an engine 2 and a tiltable cab 3. The cab is tiltable around pivot points 4 by means of a tilting cylinder 5. Said cylinder has a piston rod 6. In the embodiment shown the piston rod 6 is connected through an eye 7 to a pivot pin 8, which is secured to the cab 3.

The pivot connection is shown in detail in fig. 2. A similar eye 7 is secured to the lower end of the cylinder 5 and a similar pivot connection is provided there with the chassis. Hereunder only the pivot connection with the cab will be discussed.

In the embodiment shown, as seen in the cross-section of figure 2, recessed chambers 9 have been provided in the eye aperture of the eye 7 in symmetrical positions at both ends of the eye aperture. In each chamber a ring 10 of rubber or a similar elastic material is provided, having an interference fit with the side wall of the chamber. Said rings 10 have an interference fit relative to the pivot pin 8. The stiffness of the rubber material determines the force at which metallic contact will occur between the eye aperture and the pivot pin. This does not happen during driving with the vehicle but only when the cab is tilted, for which a large load is applied.

In order to permit assembling the cylinder 5 and the piston rod 6, as seen in plan view on the vehicle, with a small angle of e.g. 3° with the longitudinal axis of the vehicle, in connection with possible deviations of the mounting of the cab structure on the vehicle and in that case yet to obtain a sufficient contact area between the eye aperture and the pin 8, the eye aperture is beveled as seen in figure 2, such that the aperture flares outwardly at both ends of the eye aperture. Said bevels are indicated by reference number 11 in fig. 2. The same effect may be obtained by giving a convex shape to the eye aperture cross-section at said positions.

The invention provides a very effective pivot connection, which, moreover, is very simple.

The pivot connection according to the invention needs no lubrication and in order to make the connection fully maintenance free, the pins should be manufactured from non-corroding material or be lined with a similar material.

Due to the elasticity of the rings also slight errors in the alignment between cab and cab pivot pin may be overcome.

It is further to be noted that the rings may also be so-called O-rings, provided in groove shaped chambers, having a contour adapted to the O-ring cross-section.

## Claims

1. A pivot connection between the tilting cylinder device and the tiltable cab or the chassis respectively of a truck, a connecting eye being provided at one of the cylinder device ends for cooperation with a pivot pin on the cab or the chassis repec- tively, characterized in that rings (10) of rubber or similar material are placed in two recessed chambers (9) symmetrically positioned at both ends of the eye aperture and being coaxial with the eye aperture, said rings having an interference fit as well relative to the chamber side wall as relative to the pivot pin (8), the or each remaining portion of the eye aperture having a certain clearance relative to the pivot pin.

2. A pivot connection according to claims 1, characterized in that the eye aperture flares outwardly at both ends through a beveled (11) or convex contour in the direction of the axis.

3. A pivot connection according to one of the preceding claims, characterized in that the pivot pin (8) is manufactured of non-corroding material or is lined with such a material.

## Patentansprüche

1. Gelenkverbindung zwischen der Kippzylindervorrichtung und dem kippbaren Fahrerhaus, bezw. dem Fahrzeugrahmen eines Lastkraftwagens, mit einem an einem Zylinderende vorgesehenen Verbindungsauge zur Zusammenarbeit mit einem Gelenkzapfen am Fahrerhaus bezw. am Fahrzeugrahmen, dadurch gekennzeichnet, dass Ringe aus Gummi oder ähnlichem Werkstoff in zwei ausgesparten Kammern (9) angeordnet sind, welche Kammern symmetrisch an beiden Enden der Augenöffnung vorgesehen sind und koachsial mit der Augenöffnung sind, welche Ringe einen Preszsitz gegenüber der Kammerseitenwandung sowie gegenüber dem Gelenkzapfen (8) aufweisen, während der oder jeder verbleibende Teil der Augenöffnung einen gewissen Spiel gegenüber dem Gelenkzapfen aufweist.

2. Gelenkverbindung gemäss Anspruch 1, dadurch gekennzeichnet, dass die Augenöffnung an beiden Enden überein abgeschrägtes (11) oderkonvexes Profil in Achsrichtung nach aussen ausgeweitet ist.

3. Gelenkverbindung gemäss einer der vorangehenden Ansprüche, dadurch gekennzeichnet, dass der Gelenkzapfen (8) aus nicht korrodierendem Werkstoff hergestellt oder mit einem solchem Werkstoff verkleidet ist.

## Revendications

1. Connexion articulée entre le cilindre de basculement et la cabine basculante ou respectivement le chassis d'un camion, un oeillet de connexion étant prévu à une des extrémités de cilindre afin de coopérer avec un tenon d'articulation sur la cabine ou respectivement sur le chassis, caractérisée en ce que des bagues (10) de caoutchouc ou matière analoge ont été placées dans deux chambres (9) placées symmétriquement aux deux extrémités de l'ouverture d'oeillet et étant coaxiale avec l'ouverture de l'oeillet, lesdites bagues présentant un emboitage fixe par rapport a la paroi latérale de la chambre, ainsi que le rapport au tenon d'articulation (8) tandis que la ou chaque partie restante de l'ouverture de l'oeillet a un certain jeu par rapport au tenon d'articulation.

2. Connexion articulée selon la revendication 1, caractérisée en ce que l'ouverture de l'oeillet s'évase à l'exterieur au deux extrémitées selon un contour biseauté (11) ou convexe dans la direction axiale.

3. Connexion articulée selon une des revendications précédentes, caractérisée en ce que le tenon d'articulation (8) a été fabriqué de matière non-corrosive ou revêtu d'une telle matière.
